(19) Europäisches Patentamt
European Patent Office
Office européen des brevets

(11) **EP 3 300 974 A1**

(12) **EUROPÄISCHE PATENTANMELDUNG**

(43) Veröffentlichungstag:
**04.04.2018 Patentblatt 2018/14**

(51) Int Cl.:
*B60T 7/12* [(2006.01)]     *B60T 8/172* [(2006.01)]

(21) Anmeldenummer: **17191537.4**

(22) Anmeldetag: **18.09.2017**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(30) Priorität: **29.09.2016  DE 102016218905**

(71) Anmelder: **Robert Bosch GmbH
70442 Stuttgart (DE)**

(72) Erfinder:
• **Mannherz, Edith
  74189 Weinsberg (DE)**
• **Englert, Andreas
  74199 Untergruppenbach (DE)**

(54) **VERFAHREN UND VORRICHTUNG ZUM STEUERN EINER BREMSANLAGE FÜR EIN FAHRZEUG, BREMSANLAGE UND FAHRZEUG**

(57)     Die vorliegende Erfindung betrifft ein Verfahren zum Steuern einer Bremsanlage (10) für ein Fahrzeug (100) mit den Schritten (A) Bereitstellen eines Werts für eine gewünschte Fahrzeugverzögerung, (B) Erfassen eines Vorliegens oder Nichtvorliegens eines Fahrzustands mit autonomer Fahr- und/oder Parkfunktion, (C) beim Vorliegen eines Fahrzustands mit autonomer Fahr- und/oder Parkfunktion Erfassen eines Vorliegens oder Nichtvorliegens einer Notbremssituation, beim Vorliegen einer Notbremssituation in einem Fahrzustand mit autonomer Fahr- und/oder Parkfunktion (D) Erfassen eines Werts einer tatsächlichen Fahrzeugbeschleunigung und (E) Einstellen eines Bremsdrucks, einer Bremsdruckkennlinie und/oder eines Bremsdruckverlaufs eines Bremsmittels (32) einer Bremse (20) und/oder eines Bremselements (21, 22) der Bremse (20) der zu Grunde liegenden Bremsanlage (10) - zumindest temporär - auf einen minimalen Wert oder Bereich - insbesondere in rückgekoppelt geregelter Wiese - derart, dass durch (F) Anwenden des so eingestellten Bremsdrucks, der Bremsdruckkennlinie und/oder des Bremsdruckverlaufs beim Bremsen der Wert der tatsächlichen Fahrzeugbeschleunigung mit dem Wert der gewünschten Fahrzeugverzögerung übereinstimmt oder dieser in einem vorbestimmten Abweichungsintervall in etwa entspricht.

**FIG. 1**

EP 3 300 974 A1

**Beschreibung**

Stand der Technik

Die vorliegende Erfindung betrifft ein Verfahren sowie eine Vorrichtung zum Steuern einer Bremsanlage für ein Fahrzeug, eine Bremsanlage als solche sowie ein Fahrzeug mit der Bremsanlage.

Im Bereich der Fahrzeugtechnik stehen vermehrt Fahr- und Parkassistenzsysteme im Fokus. Insbesondere im Bereich des hochautomatisierten und/oder autonomen Fahrens und/oder Parkens sind Mechanismen erwünscht, die situationsbedingt einen Notbremsvorgang auslösen können, um einen Fahrzeughalt zu erzwingen.

Problematisch bei herkömmlichen Notbremsvorgängen ist die hohe Belastung auf die Bremsaggregate, deren Bremsdruck oder Bremskraft unabhängig von der jeweiligen Situation vergleichsweise hoch oder maximal ausgelegt werden. Diese hohe Bremsbelastung kann auf Grund der Häufigkeit entsprechender Situationen, insbesondere beim autonomen Einparken, zu einem erheblichen Verschleiß bei den Bremsaggregaten führen.

Offenbarung der Erfindung

Das erfindungsgemäße Verfahren zum Steuern einer Bremsanlage mit den Merkmalen des unabhängigen Anspruches 1 weist demgegenüber den Vorteil auf, dass bei entsprechenden Situationen nur ein bedarfsangepasster Bremsdruck durch die Bremsaggregate ausgeübt wird. Dies wird erfindungsgemäß mit den Merkmalen des unabhängigen Anspruches 1 dadurch erreicht, dass ein Verfahren zum Steuern einer Bremsanlage für ein Fahrzeug geschaffen wird, welches folgende Schritte aufweist: (A) Bereitstellen eines Werts für eine gewünschte Fahrzeugverzögerung $a_{soll}$, (B) Erfassen eines Vorliegens oder Nichtvorliegens eines Fahrzustands mit autonomer Fahr- und/oder Parkfunktion und (C) beim Vorliegen eines Fahrzustands mit autonomer Fahr- und/oder Parkfunktion Erfassen eines Vorliegens oder Nichtvorliegens einer Notbremssituation. Erfindungsgemäß werden beim Vorliegen einer Notbremssituation in einem Fahrzustand mit autonomer Fahr- und/oder Parkfunktion Schritte des (D) Erfassens eines Werts einer tatsächlichen Fahrzeugbeschleunigung $a_{ist}$ und des (E) Einstellens eines Bremsdrucks, einer Bremsdruckkennlinie und/oder eines Bremsdruckverlaufs eines Bremsmittels einer Bremse und/oder eines Bremselements der Bremse der zu Grunde liegenden Bremsanlage - zumindest temporär - auf einen minimalen Wert oder Bereich - insbesondere in rückgekoppelt geregelter Weise - derart ausgeführt, dass dann durch das (F) Anwenden des so eingestellten Bremsdrucks, der Bremsdruckkennlinie und/oder des Bremsdruckverlaufs beim Bremsen der Wert der tatsächlichen Fahrzeugbeschleunigung $a_{ist}$ mit dem Wert der gewünschten Fahrzeugverzögerung $a_{soll}$ übereinstimmt oder dieser in einem vorbestimmten Abweichungsintervall $\Delta a$ in etwa entspricht, so dass insbesondere die Bedingung

$$\left|a_{soll} - a_{ist}\right| \le \Delta a$$

erfüllt ist.

Die Abfolge der Schritte (A) bis (F) entspricht dabei nicht notwendigerweise der oben angegebenen Reihenfolge. Das Ausführen der einzelnen Schritte kann Bedingungen unterworfen sein, in Teilschritte untergliedert sein und/oder parallel oder gleichzeitig verlaufen.

Es ist also ein Kernaspekt der vorliegenden Erfindung, den Bremsdruck oder dergleichen gerade noch so hoch einzustellen, dass die gewünschte Fahrzeugverzögerung durch Einwirkung der Bremse erreicht wird. Das bedeutet, dass im Gegensatz zum Stand der Technik nicht mit einem konstanten Bremsdruck gearbeitet wird, der Bremsdruck kann vielmehr situativ eingeregelt werden, um das gewünschte Ergebnis zu erzielen.

Die Unteransprüche zeigen bevorzugte Weiterbildungen der Erfindung.

Das Vorliegen oder Nichtvorliegen einer Notbremssituation kann auf der Grundlage ganz verschiedener Fahrzeug- und/oder Betriebsparameter, einzeln oder in deren Kombination, bewertet und abgeleitet werden.

So ist es gemäß einer bevorzugten Ausführungsform des erfindungsgemäßen Verfahrens zum Steuern einer Bremsanlage für ein Fahrzeug vorgesehen, dass beim Erfassen (C) des Vorliegens oder Nichtvorliegens einer Notbremssituation eine tatsächliche Fahrzeuggeschwindigkeit $v_{ist}$, eine Fahrzeugbeschleunigung $a_{ist}$, ein Antriebsmoment eines Antriebs des zu Grunde liegenden Fahrzeugs, ein Hangabtriebsmoment, eine Hangabtriebskraft und/oder für diese Größen repräsentative Werte und/oder das Vorliegen oder Nichtvorliegen eines Einfachfehlers einer für die autonome Fahr- und/oder Parkfunktion notwendigen Komponente erfasst, bereitgestellt und/oder bewertet werden.

Im Sinne der vorliegenden Erfindung wird immer ganz allgemein von einer Beschleunigung und insbesondere von einer Fahrzeugbeschleunigung gesprochen. Diese kann positive Werte oder negative Werte aufweisen, je nachdem ob es sich um eine die Fahrzeuggeschwindigkeit erhöhende oder verringernde Beschleunigung, also um eine Fahrzeugverzögerung im engeren Sinne handelt.

Die verschiedenen Fahrzeug- und/oder Betriebsparameter zur Bewertung des Vorliegens oder Nichtvorliegens einer Notbremssituation können durch unterschiedliche Maßnahmen ausgewertet werden.

So bietet es sich gemäß einer bevorzugten Ausgestaltungsform der vorliegenden Erfindung an, auf das Vorliegen einer Notbremssituation zu erkennen, wenn mindestens einer der folgenden Fälle auftritt:

- Ein erfasster Wert einer tatsächlichen Fahrzeuggeschwindigkeit $v_{ist}$ oder ein für die tatsächliche Fahrzeuggeschwindigkeit $v_{ist}$ repräsentativer Wert, zum Beispiel eine tatsächliche Raddrehzahl und/oder eine daraus ermittelte Referenzgeschwindigkeit $v_{ref}$, ist größer als ein vorbestimmter Schwellenwert einer maximalen Fahrzeuggeschwindigkeit.

- Ein erfasster Wert einer tatsächlichen Fahrzeugbeschleunigung $a_{ist}$ oder ein für eine tatsächliche Fahrzeugbeschleunigung $a_{ist}$ repräsentativer Wert, zum Beispiel eine tatsächliche zeitliche Raddrehzahländerung und/oder eine daraus ermittelte Referenzbeschleunigung $a_{ref}$, ist größer oder sind als ein vorbestimmter Schwellenwert einer maximalen Fahrzeugbeschleunigung.

- Ein erfasster Wert eines tatsächlichen Antriebsmoments eines Antriebs des zu Grunde liegenden Fahrzeugs oder ein für ein tatsächliches Antriebsmoment repräsentativer Wert ist größer als ein vorbestimmter Schwellenwert einer maximalen Antriebsmoments.

- Ein erfasster Wert eines tatsächlichen Hangabtriebsmoments oder einer tatsächlichen Hangabtriebskraft oder ein für ein tatsächliches Hangabtriebsmoment oder eine tatsächliche Hangabtriebskraft repräsentativer Wert ist größer als ein vorbestimmter Schwellenwert eines maximalen Hangabtriebsmoments oder einer maximalen Hangabtriebskraft.

- Es wird das Vorliegen eines Einfachfehlers einer für die autonome Fahr- und/oder Parkfunktion notwendigen Komponente erfasst.

Zur Bestimmung des Vorliegens eines Fahrzustands mit autonomer Fahr- und/oder Parkfunktion können ebenfalls unterschiedliche Kriterien herangezogen werden. In einem besonders einfachen Fall, wird ein derartiger Fahrzustand durch eine Auswahl durch Benutzer des Fahrzeugs getroffen und am Fahrzeug eingestellt, so dass sich daraus zum Beispiel ein Steuersignal, gegebenenfalls in Form eines Flags ergibt, welches die Durchführung einer Funktion mit autonomem Fahren und/oder Parken anzeigt.

Ein besonders hohes Maß an Sicherheit stellt sich bei dem erfindungsgemäßen Verfahren dann ein, wenn beim Vorliegen einer Notbremssituation in einem Fahrzustand mit autonomer Fahr- und/oder Parkfunktion der eingestellte Bremsdruck, die Bremsdruckkennlinie und/oder der Bremsdruckverlauf beim Anwenden (F) bis zu einem Stillstand des zu Grunde liegenden Fahrzeugs beim Bremsen angewandt werden.

Der Grad der Sicherheit kann bei dem erfindungsgemäßen Verfahren weiter gesteigert werden, indem alternativ oder zusätzlich beim Vorliegen einer Notbremssituation in einem Fahrzustand mit autonomer Fahr- und/oder Parkfunktion - insbesondere nach Erreichen eines Stillstands des zu Grunde liegenden Fahrzeugs - ein Feststellen des Fahrzeugs gegen Wegrollen ausgeführt wird.

Dieser Vorgang kann auf unterschiedliche Weise realisiert werden, insbesondere (i) durch Einstellen eines Bremsdrucks, einer Bremsdruckkennlinie und/oder eines Bremsdruckverlaufs für eine Bremsanlage des zu Grunde liegenden Fahrzeugs in einem Druckbereich mit einen für einen Haltezustand minimal notwendigen Druck nicht unterschreitenden Drücken, (ii) Betätigen oder Veranlassen des Betätigens einer Feststellbremse des zu Grunde liegenden Fahrzeugs und/oder (iii) Betätigen oder Veranlassen des Betätigens eines Getriebesperrmechanismus', insbesondere einer Getriebesperrklinke, des zu Grunde liegenden Fahrzeugs.

Ferner betrifft die vorliegende Erfindung eine Vorrichtung zum Steuern einer Bremsanlage für ein Fahrzeug, welche insbesondere auf der Grundlage des erfindungsgemäßen Verfahrens betrieben wird.

Die erfindungsgemäße Vorrichtung zum Steuern einer Bremsanlage für ein Fahrzeug ist eingerichtet und weist dazu insbesondere eine oder mehrere Einheiten auf, um beim Vorliegen einer Notbremssituation in einem Fahrzustand mit autonomer Fahr- und/oder Parkfunktion des zu Grunde liegenden Fahrzeugs einen Wert einer tatsächlichen Fahrzeugbeschleunigung $a_{ist}$ zu erfassen und einen Bremsdruck, eine Bremsdruckkennlinie und/oder einen Bremsdruckverlauf eines Bremsmittels einer Bremse und/oder eines Bremselements der Bremse der zu Grunde liegenden Bremsanlage - zumindest temporär - auf einen minimalen Wert oder Bereich derart - insbesondere rückgekoppelt geregelt - einzustellen, dass beim Anwenden des so eingestellten Bremsdrucks, der Bremsdruckkennlinie und/oder des Bremsdruckverlaufs beim Bremsen der Wert der tatsächlichen Fahrzeugbeschleunigung $a_{ist}$ mit dem Wert der gewünschten Fahrzeugverzögerung $a_{soll}$ übereinstimmt oder dieser in einem Abweichungsintervall $\Delta a$ in etwa entspricht.

Ferner betrifft die vorliegende Erfindung auch eine Bremsanlage und insbesondere hydraulische Bremsanlage für ein Fahrzeug mit einem Antrieb. Die erfindungsgemäße Bremsanlage ist ausgebildet mit einer Bremse, einem Betätiger zum steuerbaren Betätigen der Bremse und mit einer Bremsleitung, welche ein Bremsmittel und insbesondere ein Bremsfluid aufweist und den Betätiger und die Bremse, insbesondere fluidmechanisch miteinander koppelt. Ferner ist die Bremsanlage mit einer erfindungsgemäßen Vorrichtung zum Steuern der Bremsanlage ausgebildet.

Die vorliegende Erfindung schafft auch ein Fahrzeug und insbesondere einen Kraftwagen oder Personenkraftwagen mit mindestens einem Rad, welches zur Fortbewegung des Fahrzeugs rotierbar ausgebildet ist, und mit einer Bremsanlage und insbesondere mit einer hydraulischen Bremsanlage gemäß der vorliegenden Erfindung zum gesteuerten Bremsen des mindestens einen Rades.

Kurzbeschreibung der Figuren

Unter Bezugnahme auf die beigefügten Figuren werden Ausführungsformen der Erfindung im Detail beschrieben.

Figur 1  zeigt in schematischer Seitenansicht eine Ausführungsform des erfindungsgemäßen Fahrzeugs.

Figur 2  zeigt nach Art eines Blockdiagramms eine Ausführungsform der erfindungsgemäßen Bremsanlage.

Figuren 3 und 4  zeigen in Form von Flussdiagrammen Ausführungsformen des erfindungsgemäßen Verfahrens zum Steuern einer Bremsanlage.

Bevorzugte Ausführungsformen der Erfindung

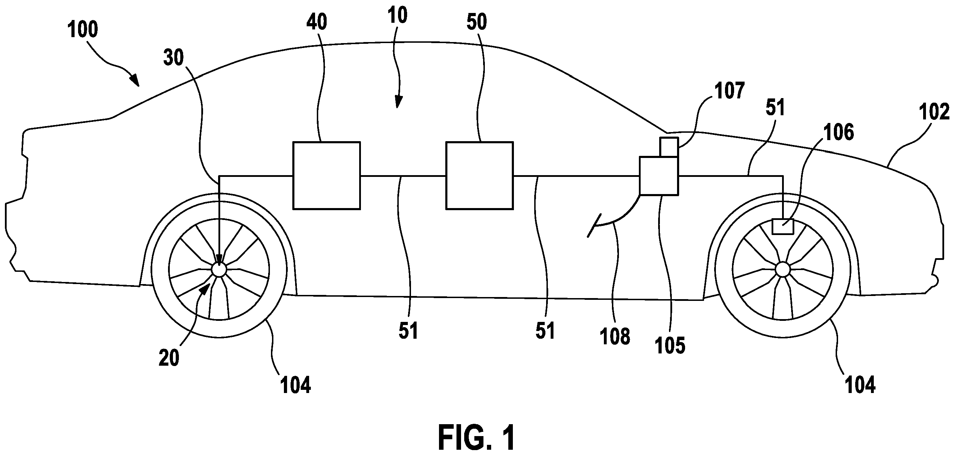

Nachfolgend werden unter Bezugnahme auf die Figuren 1 bis 4 Ausführungsbeispiele der Erfindung im Detail beschrieben. Gleiche und äquivalente sowie gleich oder äquivalent wirkende Elemente und Komponenten werden mit denselben Bezugszeichen bezeichnet. Nicht in jedem Fall ihres Auftretens wird die Detailbeschreibung der bezeichneten Elemente und Komponenten wiedergegeben.

Die dargestellten Merkmale und weiteren Eigenschaften können in beliebiger Form voneinander isoliert und beliebig miteinander kombiniert werden, ohne den Kern der Erfindung zu verlassen.

Zunächst zeigt Figur 1 in schematischer Seitenansicht eine Ausführungsform des erfindungsgemäßen Fahrzeugs 100 unter Verwendung einer Ausführungsform der erfindungsgemäßen Bremsanlage 10, wobei das Fahrzeug 100 und die Bremsanlage 10 dazu ausgebildet sind, das erfindungsgemäße Verfahren zu realisieren oder mit diesem Verfahren verwendet zu werden.

Die Ausführungsform des erfindungsgemäßen Fahrzeugs 100 gemäß Figur 1 weist eine Karosserie 102 und Räder 104 auf, wobei letztere neben der Kopplung zu einem hier nicht dargestellten Antrieb auch eine Kopplung zu einer erfindungsgemäß ausgebildeten Bremsanlage 10 aufweisen.

Die Bremsanlage 10 gemäß Figur 1 weist eine Steuervorrichtung 50, einen Betätiger 40 und eine eigentliche Bremse 20 auf. Zwischen der Bremse 20 und dem Betätiger 40 ist eine Bremsleitung 30 ausgebildet, die im Falle einer hydraulischen Bremse 20 mit einem Bremsfluid 32 als Bremsmittel gefüllt ist.

Durch die Steuervorrichtung 50 veranlasst, aktiviert der Betätiger 40 unter Vermittlung des Bremsmittels 32 in der Bremsleitung 30 die Bremse 20, um ein jeweiliges gekoppeltes Rad 104 gesteuert zu bremsen oder festzustellen. Dazu ist zwischen der Steuervorrichtung 50 und dem Betätiger 40 eine Steuerleitung 51 ausgebildet. Eine weitere Steuerleitung 51 dient auch dazu, mit Sensoren 106 und 107 verbunden zu sein, um entsprechende Sensorsignale zur Steuervorrichtung 50 einzulesen, die dann einer Bewertung zugeführt werden. Auf Grund einer derartigen Bewertung wird dann auf das Vorliegen oder Nichtvorliegen eines Fahrzustandes mit einer autonomen Fahr- und/oder Parkfunktion und/oder auf das Vorliegen oder Nichtvorliegen einer Notbremssituation erkannt.

In dem in Figur 1 dargestellten Fall handelt es sich bei dem Sensor 106 um einen Raddrehzahlsensor und bei dem Sensor 107 um einen Motorsensor, welche unter Zwischenschaltung einer Fahrzeug-/Motorsteuerung 105 mit der Steuervorrichtung 50 der erfindungsgemäßen Bremsanlage 10 verbunden sind. Eine derartige Anordnung ist nicht obligatorisch.

Des Weiteren ist im Zusammenhang mit der Fahrzeug-/Motorsteuerung 105 ein Pedal 108, zum Beispiel für eine Benutzerbetätigung der Bremsanlage 10 ausgebildet. Auch dieses Mittel ist nicht obligatorisch.

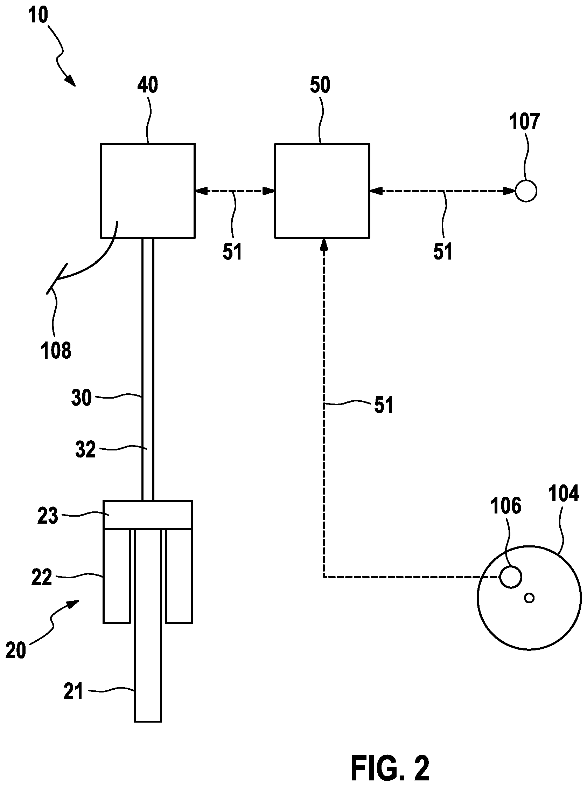

Figur 2 zeigt nach Art eines Blockdiagramms eine Ausführungsform der erfindungsgemäßen Bremsanlage 10.

Die erfindungsgemäße Bremsanlage 10 gemäß Figur 2 weist in Verbindung mit einer Steuervorrichtung 50, nämlich über eine Erfassungs- und Steuerleitung 51, einen Betätiger 40, hier in Verbindung mit einem Pedal 108, auf. Über eine Bremsleitung 30 ist der Betätiger 40 mit der eigentlichen Bremse 20 verbunden, hier in Form einer Scheibenbremse, mit einer Bremsscheibe 21, mit Bremsbelägen 22 und mit einem Bremssattel 23.

Beim Vorliegen einer hydraulischen Bremsanlage 10 handelt es sich bei dem in der Bremsleitung 30 laufenden Bremsmittel 32 um ein Bremsfluid.

Über Erfassungs- und Steuerleitungen 51 ist die Steuervorrichtung 50 auch mit zwei Sensoren 106, 107 verbunden, hier in Form eines Raddrehzahlsensors 106 zum Erfassen der Drehzahl des Rades 104, wobei der zweite Sensor 107 zum Beispiel ein Motorantriebsmoment, eine Hangabtriebskraft oder ein Hangabtriebsmoment, eine Beschleunigung oder eine andere für die Lage, die Orientierung und/oder den Bewegungszustand des Fahrzeugs 100 repräsentative Messgröße liefern kann. Es können auch weitere Sensoren in einer Mehrzahl in Kombination miteinander vorgesehen sein, um die Detektion einer Notbremssituation sicherer gestalten zu können.

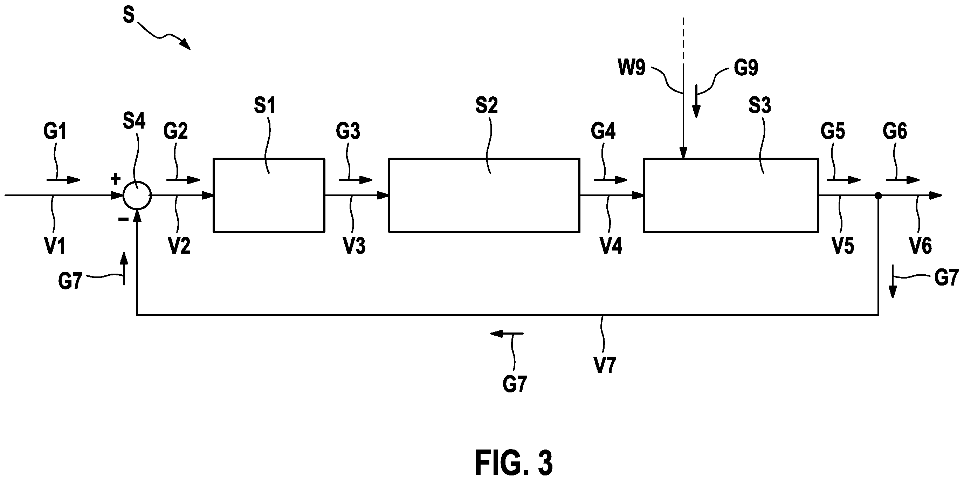

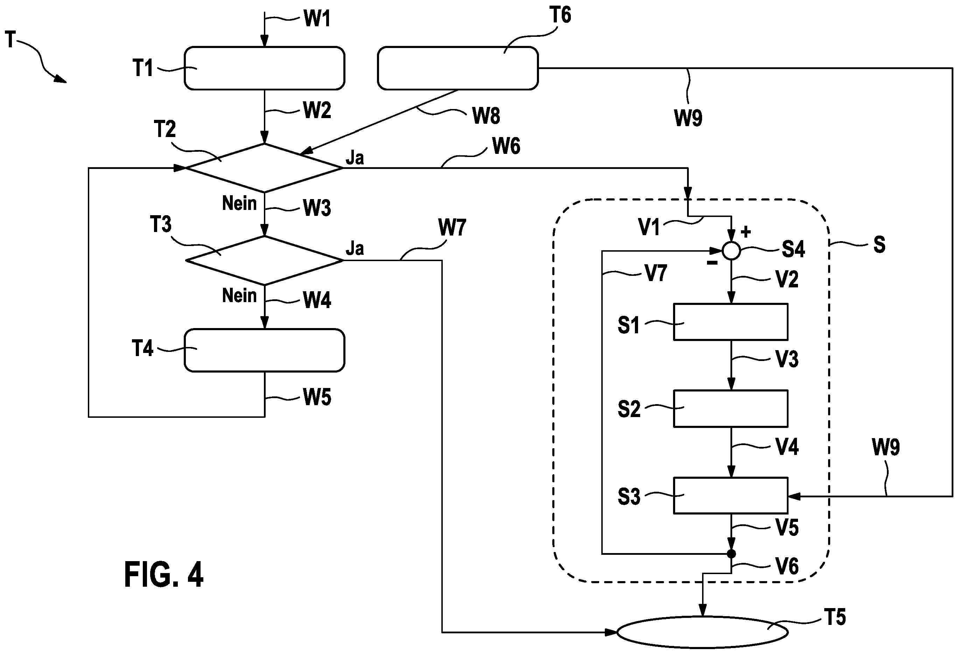

Figuren 3 und 4 zeigen in Form von Flussdiagrammen Aspekte von Ausführungsformen des erfindungsgemäßen Verfahrens zum Steuern einer Bremsanlage 10.

Dabei beschreibt Figur 3 einen Regelkreis S, mit welchem gemäß der vorliegenden Erfindung situationsabhängig ein Bremsdruck, eine Bremsdruckkennlinie und/oder ein Bremsdruckverlauf eines Bremsmittels 32 einer Bremse 20 einer erfindungsgemäßen Bremsanlage 10 eines Fahrzeugs 100 auf einen minimalen Wert oder Bereich in rückgekoppelt geregelter Weise so eingestellt werden kann, dass eine tatsächliche Fahrzeugbeschleunigung $a_{ist}$ im Sinne einer Fahrzeugverzögerung einem Sollwert entspricht oder sich einem Sollwert annähert, nämlich einer gewünschten Fahrzeugverzögerung $a_{soll}$.

Im Sinne der vorliegenden Erfindung kann es sich bei diesem Regelkreis S um Betriebskomponenten in Hardware, um Ablaufkomponenten eines Verfahrens, zum Beispiel in Software, oder um eine Kombination davon handeln.

Ein Kernaspekt des Regelkreises S ist die rückgekoppelte Struktur, welche notwendig ist, um - im Gegensatz zum herkömmlichen Vorgehen - einen <u>minimalen</u> Wert oder Bereich für den Bremsdruck, die Bremsdruckkennlinie und/oder den Bremsdruckverlauf einzustellen, so dass sich dennoch die tatsächliche Fahrzeugbeschleunigung $a_{ist}$ einer gewünschten Fahrzeugverzögerung als Sollwert $a_{soll}$ annähert oder deren Wert einnimmt.

Dazu wird gemäß Figur 3 dem Eingang V1, welcher mit dem nicht invertierenden Eingang eines Addierer S4 verbunden ist, die gewünschte Fahrzeugbeschleunigung $a_{soll}(t)$ im Sinne einer Fahrzeugverzögerung als Führungsgröße G1 zugeführt.

Über die Rückkopplungsschleife oder den Rückkoppelweg V7 wird dem invertierenden Eingang des Addierers S4 die aktuelle tatsächliche Fahrzeugbeschleunigung $a_{ist}(t)$ als Größe G7 zugeführt.

Der Addierer S4 erzeugt die Differenz G2, also den Wert xd = $a_{soll}(t) - a_{ist}(t)$, welcher über den Pfad V2 dem Eingang einer Reglerkomponente S1 zugeführt wird, wobei diese darauf basierend eine Stellgröße G3 auf den Pfad V3 abführt und - im Fall der Figur 3 - zum Beispiel einer Bremsdruckstelleinheit S2 auf den Eingang legt. Die Stellgröße G3 kann zum Beispiel eine berechnete Pumpenförderleistung, eine Motordrehzahl für einen Pumpenmotor oder dergleichen bezeichnen, welche prognostiziert nötig sind, um die Werte $a_{soll}(t)$ und $a_{ist}(t)$ einander anzugleichen.

Aufgrund der Wirkung der Bremsdruckstelleinheit S2 ergibt sich auf dem Pfad V4 als Stellgröße G4 der sich ergebende Bremsdruck p(t), gegebenenfalls in zeitabhängiger Form, welcher einer Regelstreckeneinheit S3 zugeführt wird.

Wegen der Wirkung der Regelstreckeneinheit S3 ergibt sich der neue aktuelle Wert G5 der tatsächlichen Fahrzeugbeschleunigung $a_{ist}(t)$, welcher als Regelgröße G7 über den Rückkopplungspfad V7 im Regelkreis zurückgeführt wird.

Über den zusätzlichen Pfad W9 können in der Regel Streckeneinheit S3 noch ein oder mehrere Störgrößen G9 berücksichtigt werden. Dabei kann es sich zum Beispiel um eine zeitabhängige Abweichung eines Motorantriebsmoments, insbesondere von einem wirksamen Hangabtriebsmoment oder einer Hangabtriebskraft, handeln.

Figur 4 gibt einen größeren Überblick über eine Ausführungsform des erfindungsgemäßen Verfahrens zum Steuern einer Bremsanlage 10 für ein Fahrzeug 100, bei welchem der Regelkreis S gemäß Figur 3 integriert ausgebildet ist.

Über einen Eingangspfad W1 wird bei T1 die Durchführung eines Parkvorgangs initiiert, welcher im fehlerfreien Fall zum Beispiel mit einer Fahrzeuggeschwindigkeit unterhalb eines Schwellenwertes von 10 km/h eingeleitet werden soll.

Im Übergang W2 zur Einheit T2 wird bei dieser abgefragt, ob die Geschwindigkeitsbedingung zum Durchführen des Einparkens erfüllt ist. Übersteigt also die Fahrzeuggeschwindigkeit die für das Einparken höchstens zulässige Grenzgeschwindigkeit nicht - "Nein" in der Einheit T2 - so wird nach dem Übergang W3 zur Einheit T3 dort geprüft, ob der Parkvorgang abgeschlossen ist. Ist dies der Fall - "Ja" in der Einheit T3 - so erfolgt die Verzweigung W7 zum Feststellen und Sichern T5 des Fahrzeugs 100. Ist dagegen der Parkzustand in der Einheit T3 nicht abgeschlossen - "Nein" in der Einheit T3 - so erfolgt die Verzweigung W5 zurück zur Geschwindigkeitsüberprüfung T2 mit dem erneuten Durchlaufen der Schritte in der eben beschriebenen Art.

Wird bei der Geschwindigkeitsüberprüfung T2 ein Überschreiten der für das Einparken höchstens zulässigen Geschwindigkeitsschwelle ermittelt, so erfolgt im Zusammenhang mit dem Pfad W6 das Bereitstellen des Sollwertes $a_{soll}(t)$ für die Fahrzeugverzögerung für den Eingang V1 der Regelschleife S.

Über die Einheit T6 und die Pfade W8 und W9 können wiederum Störgrößen G9 in der Regelschleife S aber auch im Zusammenhang mit der Geschwindigkeitsüberprüfung T2 berücksichtigt werden.

Diese und weitere Merkmale und Eigenschaften der vorliegenden Erfindung werden an Hand der folgenden Darlegungen weiter erläutert:

Gegenstand der Erfindungsmeldung sind hochautomatisierte Ein- und/oder Ausparkvorgänge. Dabei muss nicht zwingend ein Fahrer im Fahrzeug 100 anwesend sein. Das heißt das Fahrzeug 100 muss jederzeit, auch im Fehlerfall, selbstständig in einen sicheren Zustand gelangen können. Im Fall von hochautomatisierten Ein- und/oder Ausparkvorgängen ist der sichere Zustand immer der Stillstand. Dieser wird im Vollsystem über einen automatischen Druckaufbau, beispielsweise über ESP oder einen elektrischen oder elektronischen Bremskraftverstärker der Betriebsbremse erreicht, im Folgenden auch Betriebsbremssteller genannt. Sollte dieser Betriebsbremssteller auf Grund eines Fehlers nicht in der Lage sein Bremsdruck auf zu bauen und damit das Fahrzeug in den Stillstand zu verzögern, muss ein zweiter fahrerunabhängiger Bremssteller als Rückfallebene zur Verfügung stehen.

Das dem Stand der Technik entsprechende Sicherheitskonzept führt nun bei Erkennen eines Fehlers in einem der Bremssysteme eine Notbremsung des Fahrzeugs aus. Anschließend wird das Fahrzeug 100 durch die Feststellbremseinrichtung oder den Antriebsstrang, z.B. eine Getriebesperrklinke, dauerhaft gegen Wegrollen gesichert. Mittels dieses Verfahrens lassen sich aktuell alle Einfachfehler innerhalb eines vorgegebenen Anhalteweges (gefordert durch den Fahrzeughersteller zur Absicherung aller Fehlerfälle) durch das redundant ausgeführte Bremssystem abfangen.

Ein mögliches Fehlerbild, welches während eines hochautomatisierten Einparkvorganges auftreten kann, ist eine ungewollte Fahrzeugbeschleunigung durch eine ungewollte Motorantriebsmomentbereitstellung. Dieses Fehlerbild kann sowohl bei mittels Verbrennungsmotor als auch bei mittels Elektromotor - oder bei Hybridfahrzeugen durch beide - angetriebenen Fahrzeugen auftreten. Des Weiteren können noch andere Fehlerbilder oder auch Nutzungsbedingungen dazu führen, dass ein hochautomatisiert parkendes Fahrzeug während eines Parkmanövers eine unerwünscht hohe Geschwindigkeit erreicht.

Bei Verfahren zum Einhalten eines spezifizierten Anhaltewegs im Fehlerfall einer ungewollten Motorantriebsmomentbereitstellung bei Überschreitung einer bestimmten Geschwindigkeit wird stets ein sehr hoher Bremsdruck (beispielsweise 160 bar) durch den hydraulischen Bremssteller bereitgestellt.

Nun können auch andere Fehlerbilder dazu führen, dass das Fahrzeug 100 kurzzeitig diese feste Geschwindigkeitsschwelle überschreitet. Fährt das Fahrzeug während eines Einparkvorganges zum Beispiel von einem hohen Bordstein herunter, kann dies dazu führen, dass die Geschwindigkeitsschwelle für ein Auslösen der hydraulischen Notverzögerung mit sehr hohem Druck überschritten wird. Da dieser Anwendungsfall beim hochautomatisierten Parken sehr häufig vorkommen kann (bis zu 100% bei ungünstigsten Bedingungen), muss hier zum Herabsetzen des Lastprofils des hydraulischen Bremsstellers eine bedarfsgerechte Druckbereitstellung durchgeführt werden. Des Weiteren muss bei Einparkmanövern noch mit zusätzlichen Gegebenheiten, z.B. Schlupf, Schlagloch, usw., gerechnet werden, welche das Fahrzeug kurzfristig auf die hohe Auslösegeschwindigkeit beschleunigen lassen.

Das erfindungsgemäße Verfahren regelt nun anhand einiger im Bremssteller verfügbarer Fahrzeuggrößen den Bremsdruck bedarfsgerecht auf die jeweilige Situation und den jeweiligen Fehlerfall ein. Dadurch wird das Lastprofil des hydraulischen Bremsstellers erheblich herabgesetzt, was unter anderem eine schwächere und somit günstigere Auslegung der hydraulischen Komponenten zulässt. Ebenfalls ist durch dieses Verfahren mit einem komfortableren Bremsmanöver zu rechnen. Da die Einregelung des benötigten Bremsdruckes nur anhand von im Bremsregler vorhandenen Größen durchgeführt wird, muss durch das Herabsetzen des zu Beginn der Regelung eingestellten Zielbremsdruckes nicht mit einer Verschlechterung der Anhalteperformance gerechnet werden. Das hier vorgestellte Verfahren kann zum Einregeln einer bestimmten Verzögerung benutzt werden, unabhängig davon ob das Ziel eine Notbremsverzögerung bis in den Stillstand oder aber nur eine Verzögerung auf eine (kleinere) Zielgeschwindigkeit ist.

Das erfindungsgemäße Verfahren nutzt die im Bremsregler vorhandene (aus den Raddrehzahlen berechnete) Größe der Fahrzeugreferenzgeschwindigkeit $v_{ref}(t)$. Aus deren Ableitung lässt sich die aktuell vorliegende Fahrzeugbeschleunigung $a_{ist}(t)$ ermitteln, nämlich gemäß

$$a_{ist}(t) = \frac{dv_{ref}(t)}{dt}\ . \qquad (1)$$

Der Fahrzeughersteller sowie der Gesetzgeber fordern eine Mindestverzögerung $a_{soll}(t)$, welche vom Fahrzeug im Fehlerfall während eines Fahrmanövers, wie auch während eines hochautomatisierten Parkvorganges bereitgestellt werden muss.

Das hier vorgestellte Verfahren nutzt nun als mögliche Ausführung einen Regelkreis S gemäß Figur 3 zur Realisierung der bedarfsgerechten Bremsdruckbereitstellung in dem oben vorgestellten Fehlerfall.

Figur 3 zeigt einen erfindungsgemäß aufgebauten Regelkreis S, bei welchem die Bremsdruckstellung auch abhängig von Motormoment und Hangabtriebsmoment bestimmt werden kann.

Zur Verdeutlichung des Verfahrens wird dieses nun anhand einer möglichen, regelungstechnischen Auslegung gemäß Figur 3 nochmals erläutert.

Als Führungsgröße des Regelkreises dient die gewünschte und gesetzlich vorgeschriebene Fahrzeugverzögerung $a_{soll}(t)$ im Fehlerfall.

Als Regelgröße am Ausgang der Regelstrecke V5 dient die sich einstellende Fahrzeugverzögerung $a_{ist}(t)$, zum Beispiel als gemessenes oder mit einem Raddrehzahlsensorsignal gebildetes und im Bremsregler vorhandenes Signal.

Die Regeldifferenz xd ist somit die gewünschte Fahrzeugverzögerung $a_{soll}(t)$ minus die tatsächliche Fahrzeugverzögerung $a_{ist}(t)$:

$$xd = a_{soll}(t) - a_{ist}(t) .$$

Die Stellgröße G4 am Ausgang des Reglers S2 ist - zum Beispiel bei einem ESP - der benötigte hydraulische Volumenstrom zum Ausgleich der Regeldifferenz G2. Der Bremsdrucksteller S3, welcher als Eingangsgröße G4 gerade eben diese Pumpendrehzahldifferenz besitzt stellt nun den notwendigen Bremsdruck bereit. Dieser wirkt neben den möglichen Störgrößen G9 - z.B. einem fälschlichen Motormoment, einem Hangabtriebsmoment, einer Bordsteinkante - an der Regelstrecke S3 und sorgt für die bedarfsgerechte Verzögerung des Fahrzeugs 100.

Der große Vorteil dieses Verfahrens ist es, dass alle im Regelkreis S benötigten Signale im Bremssystemsteuergerät 50 - welches z.B. den Regler S1 beinhaltet - vorhanden sind. Somit ist ein schnelles Einschwingverhalten des Regelkreises S gewährleistet.

Alternativ lässt sich das erfindungsgemäße Verfahren mit sämtlichen anderen Bremssystemen realisieren, welche per Hydraulik, zum Beispiel durch einen elektromechanischen Bremskraftverstärker, oder aber auch elektromechanisch auf die Radbremsen des Fahrzeugs 100 wirken. Das erfindungsgemäße Verfahren ist somit mit jeglicher Form von Bremsmitteln anwendbar.

Unter anderem können folgende Aspekte Gegenstand der vorliegenden Erfindung sein:

(1) Das Bremssystem 10 wird bei einer Notbremssituation während der Durchführung einer autonomen Fahr- und/oder Parkfunktion lediglich bedarfsgerecht zum Einhalten der gewünschten Fahrzeugnegativbeschleunigung angesteuert.

(2) Das Bremssystem 10 kann das Fahrzeug bei der Überschreitung einer Geschwindigkeitsschwelle und/oder alternativ eines anderen Kriteriums während der Durchführung einer autonomen Fahr- und Parkfunktion das Fahrzeug 100 automatisch in den Stillstand verzögern.

(3) Es kann eine repräsentative Größe für die Fahrzeuggeschwindigkeit des Fahrzeuges 100 beobachtet und ausgewertet werden.

(4) Die repräsentative Größe für die Fahrzeuggeschwindigkeit des Fahrzeuges 100 kann eine aus einer Raddrehzahlsensorik ermittelte Referenzgeschwindigkeit sein.

(5) Das Fahrzeug kann nach dem Erreichen des Stillstandes mittels einer automatisierten Feststellbremse und /oder mittels einer Getriebesperrklinke dauerhaft gegen Wegrollen gesichert werden.

(6) Durch einen bedarfsgerechten Bremsdruckaufbau kann die Auswirkung eines unerwünschten Fehlers, bei dem ein Motor selbstständig beschleunigt, auf Fahrzeugebene kompensiert werden, wobei das Fahrzeug 100 zusätzlich in den Stillstand verzögert werden kann.

(7) Weitere Aspekte der vorliegenden Erfindung sind ein Regel- und/oder Steuergerät zur Durchführung des erfindungsgemäßen Verfahrens, eine hydraulische Stelleinheit zur Durchführung des erfindungsgemäßen Verfahrens, ein Bremssystem in einem oder für ein Fahrzeug mit einem erfindungsgemäßen Regel- und/oder Steuergerät.

**Patentansprüche**

1. Verfahren zum Steuern einer Bremsanlage (10) für ein Fahrzeug (100), mit den Schritten

    (A) Bereitstellen eines Werts für eine gewünschte Fahrzeugverzögerung,
    (B) Erfassen eines Vorliegens oder Nichtvorliegens eines Fahrzustands mit autonomer Fahr- und/oder Parkfunktion,

(C) beim Vorliegen eines Fahrzustands mit autonomer Fahr- und/oder Parkfunktion Erfassen eines Vorliegens oder Nichtvorliegens einer Notbremssituation,

beim Vorliegen einer Notbremssituation in einem Fahrzustand mit autonomer Fahr- und/oder Parkfunktion

(D) Erfassen eines Werts einer tatsächlichen Fahrzeugbeschleunigung und

(E) Einstellen eines Bremsdrucks, einer Bremsdruckkennlinie und/oder eines Bremsdruckverlaufs eines Bremsmittels (32) einer Bremse (20) und/oder eines Bremselements (21, 22) der Bremse (20) der zu Grunde liegenden Bremsanlage (10) - zumindest temporär - auf einen minimalen Wert oder Bereich - insbesondere in rückgekoppelt geregelter Weise - derart, dass durch

(F) Anwenden des so eingestellten Bremsdrucks, der Bremsdruckkennlinie und/oder des Bremsdruckverlaufs beim Bremsen der Wert der tatsächlichen Fahrzeugbeschleunigung mit dem Wert der gewünschten Fahrzeugverzögerung übereinstimmt oder dieser in einem vorbestimmten Abweichungsintervall in etwa entspricht.

2. Verfahren nach Anspruch 1,
bei welchem beim Erfassen (C) des Vorliegens oder Nichtvorliegens einer Notbremssituation eine tatsächliche Fahrzeuggeschwindigkeit, eine Fahrzeugbeschleunigung, ein Antriebsmoment eines Antriebs des zu Grunde liegenden Fahrzeugs (100), ein Hangabtriebsmoment, eine Hangabtriebskraft und/oder für diese Größen repräsentative Werte und/oder das Vorliegen oder Nichtvorliegen eines Einfachfehlers einer für die autonome Fahr- und/oder Parkfunktion notwendigen Komponente erfasst, bereitgestellt und/oder bewertet werden.

3. Verfahren nach einem der vorangehenden Ansprüche,
bei welchem auf Vorliegen einer Notbremssituation erkannt wird, wenn

- ein erfasster Wert einer tatsächlichen Fahrzeuggeschwindigkeit oder ein für die tatsächliche Fahrzeuggeschwindigkeit repräsentativer Wert, eine tatsächliche Raddrehzahl und/oder eine daraus ermittelte Referenzgeschwindigkeit, größer ist als ein vorbestimmter Schwellenwert einer maximalen Fahrzeuggeschwindigkeit,
- ein erfasster Wert einer tatsächlichen Fahrzeugbeschleunigung oder ein für eine tatsächliche Fahrzeugbeschleunigung repräsentativer Wert, eine tatsächliche zeitliche Raddrehzahländerung und/oder eine daraus ermittelte Referenzbeschleunigung, größer ist als ein vorbestimmter Schwellenwert einer maximalen Fahrzeugbeschleunigung,
- ein erfasster Wert eines tatsächlichen Antriebsmoments eines Antriebs des zu Grunde liegenden Fahrzeugs (100) oder ein für ein tatsächliches Antriebsmoment repräsentativer Wert größer ist als ein vorbestimmter Schwellenwert eines maximalen Antriebsmoments,
- ein erfasster Wert eines tatsächlichen Hangabtriebsmoments oder einer tatsächlichen Hangabtriebskraft oder ein für ein tatsächliches Hangabtriebsmoment oder eine tatsächliche Hangabtriebskraft repräsentativer Wert größer ist als ein vorbestimmter Schwellenwert eines maximalen Hangabtriebsmoments oder einer maximalen Hangabtriebskraft und/oder
- das Vorliegen eines Einfachfehlers einer für die autonome Fahr- und/oder Parkfunktion notwendigen Komponente erfasst wird.

4. Verfahren nach einem der vorangehenden Ansprüche,
bei welchem beim Vorliegen einer Notbremssituation in einem Fahrzustand mit autonomer Fahr- und/oder Parkfunktion der eingestellte Bremsdruck, die Bremsdruckkennlinie und/oder der Bremsdruckverlauf beim Anwenden (F) bis zu einem Stillstand des zu Grunde liegenden Fahrzeugs (100) beim Bremsen angewandt werden.

5. Verfahren nach einem der vorangehenden Ansprüche,
bei welchem beim Vorliegen einer Notbremssituation in einem Fahrzustand mit autonomer Fahr- und/oder Parkfunktion - insbesondere nach Erreichen eines Stillstands des zu Grunde liegenden Fahrzeugs (100) - ein Feststellen des Fahrzeugs (100) gegen Wegrollen ausgeführt wird, insbesondere (i) durch Einstellen eines Bremsdrucks, einer Bremsdruckkennlinie und/oder eines Bremsdruckverlaufs für eine Bremsanlage (10) des zu Grunde liegenden Fahrzeugs (100) in einem Druckbereich mit - einen für einen Haltezustand minimal notwendigen Druck nicht unterschreitenden - Drücken, (ii) Betätigen oder Veranlassen des Betätigens einer Feststellbremse des zu Grunde liegenden Fahrzeugs (100) und/oder (iii) Betätigen oder Veranlassen des Betätigens eines Getriebesperrmechanismus', insbesondere einer Getriebesperrklinke, des zu Grunde liegenden Fahrzeugs (100).

6. Vorrichtung (50) zum Steuern einer Bremsanlage (10) für ein Fahrzeug (100), insbesondere auf der Grundlage eines Verfahrens nach einem der Ansprüche 1 bis 5,

mit einer Einheit

- welche ausgebildet ist, beim Vorliegen einer Notbremssituation in einem Fahrzustand mit autonomer Fahr- und/oder Parkfunktion des zu Grunde liegenden Fahrzeugs (100)

- einen Wert einer tatsächlichen Fahrzeugbeschleunigung zu erfassen und
- einen Bremsdruck, eine Bremsdruckkennlinie und/oder einen Bremsdruckverlauf eines Bremsmittels (32) einer Bremse (20) und/oder eines Bremselements (21, 22) der Bremse (20) der zu Grunde liegenden Bremsanlage (10) - zumindest temporär - auf einen minimalen Wert oder Bereich derart - insbesondere rückgekoppelt geregelt - einzustellen, dass beim Anwenden des so eingestellten Bremsdrucks, der Bremsdruckkennlinie und/oder des Bremsdruckverlaufs beim Bremsen der Wert der tatsächlichen Fahrzeugbeschleunigung mit dem Wert der gewünschten Fahrzeugverzögerung übereinstimmt oder dieser in einem vorbestimmten Abweichungsintervall in etwa entspricht, und

- welche mit der hydraulischen Bremsanlage (10) koppelbar und so eingerichtet ist, bei Kopplung mit und bei Betätigung der hydraulischen Bremsanlage (10) zu veranlassen, dass beim Bremsen der entsprechend eingestellte Bremsdruck, die eingestellte Bremsdruckkennlinie und/oder der eingestellte Bremsdruckverlauf verwendet werden.

7. Bremsanlage (10) und insbesondere hydraulische Bremsanlage (10) für ein Fahrzeug (100) mit einem Antrieb, mit:

- einer Bremse (20),
- einem Betätiger (40),
- einer Bremsleitung (30), welche ein Bremsmittel und insbesondere ein Bremsfluid (32) aufweist und den Betätiger (40) und die Bremse (20) fluidmechanisch miteinander koppelt, und
- einer Vorrichtung (50) zum Steuern nach Anspruch 6.

8. Fahrzeug (100), insbesondere Kraftwagen oder Personenkraftwagen, mit:

- mindestens einem Rad (104), welches zur Fortbewegung des Fahrzeugs (100) rotierbar ausgebildet ist, und
- einer Bremsanlage (10) und insbesondere hydraulischen Bremsanlage (10) nach Anspruch 7 zum gesteuerten Bremsen des mindestens einen Rades (104).

FIG. 1

EP 3 300 974 A1

**FIG. 2**

FIG. 3

FIG. 4

Europäisches
Patentamt

European
Patent Office

Office européen
des brevets

**EUROPÄISCHER RECHERCHENBERICHT**

Nummer der Anmeldung

EP 17 19 1537

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2015/036393 A1 (BOSCH GMBH ROBERT [DE]) 19. März 2015 (2015-03-19) * Seite 3, Zeile 8 - Zeile 30 * * Seite 4, Zeile 24 - Seite 5, Zeile 11 * * Seite 7, Zeile 15 - Zeile 18 * * Seite 12, Zeile 30 - Seite 13, Zeile 20 * * Seite 19, Zeile 26 - Seite 20, Zeile 9 * * Seite 22, Zeile 7 - Seite 23, Zeile 16 * ----- | 1-8 | INV. B60T7/12 B60T8/172 |
| X | US 2005/264099 A1 (KAMIYA KAZUHIRO [JP] ET AL) 1. Dezember 2005 (2005-12-01) * Absätze [0003], [2324] * * Absätze [0067], [0084], [0085] * * Absatz [0136] - Absatz [0138] * * Abbildungen 1-3,7 * ----- | 1-8 | |
| A | EP 2 314 490 A1 (AUDI AG [DE]) 27. April 2011 (2011-04-27) * das ganze Dokument * ----- | 1,6 | |
| A | EP 2 390 862 A2 (AUDI AG [DE]; VOLKSWAGEN AG [DE]) 30. November 2011 (2011-11-30) * Absatz [0070] - Absatz [0073] * ----- | 1,6 | RECHERCHIERTE SACHGEBIETE (IPC) B60T |

Der vorliegende Recherchenbericht wurde für alle Patentansprüche erstellt

| Recherchenort | Abschlußdatum der Recherche | Prüfer |
|---|---|---|
| München | 13. Februar 2018 | Colonna, Massimo |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
........................................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 17 19 1537

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-02-2018

| Im Recherchenbericht angeführtes Patentdokument | Datum der Veröffentlichung | Mitglied(er) der Patentfamilie | Datum der Veröffentlichung |
|---|---|---|---|
| WO 2015036393 A1 | 19-03-2015 | CN 105517866 A<br>DE 102013218401 A1<br>EP 3044056 A1<br>JP 2016533964 A<br>US 2016214595 A1<br>WO 2015036393 A1 | 20-04-2016<br>19-03-2015<br>20-07-2016<br>04-11-2016<br>28-07-2016<br>19-03-2015 |
| US 2005264099 A1 | 01-12-2005 | KEINE | |
| EP 2314490 A1 | 27-04-2011 | DE 102009050399 A1<br>EP 2314490 A1 | 05-05-2011<br>27-04-2011 |
| EP 2390862 A2 | 30-11-2011 | DE 102010021591 A1<br>EP 2390862 A2 | 01-12-2011<br>30-11-2011 |

EPO FORM P0461

Für nähere Einzelheiten zu diesem Anhang : siehe Amtsblatt des Europäischen Patentamts, Nr.12/82